# EUROPEAN PATENT APPLICATION

(11) **EP 4 407 482 A1**
(43) Date of publication of application: **31.07.2024**
(21) Application number: 23153081.7
(22) Date of filing: 24.01.2023
(51) Int. Cl.: G06F 18/214, G06N 3/091, G06V 10/774, G06V 10/82, G06V 20/56, G06V 20/58

(54) **TRAINING AND OPERATING AN OBJECT DETECTING SYSTEM FOR A VEHICLE**

(71) Applicant: Volvo Car Corporation, 405 31 Göteborg (SE)
(72) Inventor: NOURI, Ali, 40531 Göteborg (SE); FEI, Zhennan, 40531 Göteborg (SE)
(74) Representative: Maiwald GmbH

(57) **Abstract**

The disclosure relates to a computer-implemented method for training and/or operating an object detecting system (100) for a vehicle (500) and an object detecting system (100) for a vehicle. The method comprises the steps of visualizing (20) a first image or video scene (1511) in a first frame (151) of a user interface (150), converting (30) the first image or video scene (1511) to a second image or video scene (1521) for generating an annotation prompt (155) of the object (800) based on a perception model (185) of a perception module (180), visualizing (40) the second image or video scene (1521) and/or the annotation prompt, determining (60) an adjusting event for triggering and/or modifying the annotation prompt (155), and recording (70) the adjusting event by triggering and/or modifying the annotation prompt in the first frame and/or the second frame by the user.

## Description

The present disclosure relates to a computer-implemented method for training and/or operating an object detecting system for a vehicle, an object detecting system for a vehicle in a fleet, a vehicle comprising an object detecting system and a training module for an object detecting system for a fleet.

Autonomous vehicles are developed with object sensing techniques. The robustness and the reliability of such sensing techniques are of a great importance for such advance driver-assistance systems (ADAS) and automated driving Systems (ADS), since the functions of the ADAS and ADS systems may provide safety and protection by avoiding catastrophes such as notorious accidents while driving the vehicles.

It is an objective of the present disclosure to provide an optimised object sensing system for a vehicle with high accuracy and efficiency and without oversensitivity.

The problem is at least partially solved or alleviated by the subject matter of the independent claims of the present disclosure, wherein further examples are incorporated in the dependent claims.

According to a first aspect, there is provided a computer-implemented method for training and/or operating an object detecting system for a vehicle. The computer implemented method comprises the following steps:
- visualizing, in a first frame of a user interface, a first image or video scene,
- converting the first image or video scene to a second image or video scene for generating an annotation prompt of the object based on a perception model of a perception module,
- visualizing, in a second frame of the user interface, the second image or video scene and/or the annotation prompt of the object,
- determining an adjusting event for triggering and/or modifying the annotation prompt of the object in the first image or video scene and/or in the second image or video scene, if a difference between the second image or video scene and the first image or video scene is identified by a user; and
- recording the adjusting event by triggering and/or modifying the annotation prompt of the object, based on the adjusting event, in the first frame and/or the second frame of the user interface by the user.

The second image or video scene is an animated image or video scene of the first image or video scene. In other words, the second image or video scene may be the animation created image or video scene by converting the first image or video scene using the perception module. In contrast, the first image or video scene may be generated from raw data of a camera image or video.

The computer-implemented method may also be used for monitoring the object detecting system, anomaly detection of the object detecting system and/or data collection of the object detecting system.

The vehicle may be a fully or partially autonomous vehicle. Optionally, the vehicle may be an electric battery vehicle (BEV). The object may be a pedestrian, an obstacle or a different traveling vehicle on the road in front of the vehicle or downstream of the planning route of the vehicle. The object may be detected by the image sensor and annotated in the first and/or second image or video scenes, so that a collision or an accident of the vehicle with the object may be prevented in advance.

For example, the adjusting event may start from a predefined few seconds, preferably 10 to 20 seconds, before the user touching the user interface for recording the adjusting event and end in a predefined few seconds, preferably 10 to 20 second after the user touching the user interface for recording the adjusting event.

In an example, the computer-implemented method may further comprise the step of generating and/or outputting a data set, based on the adjusting event recorded and/or the annotation prompt of the object triggered and/or modified by the user, for modifying and/or training the perception model of the perception module.

The perception model of the perception module may be a neural network-based model and follow machine learning algorithms, of which the outputs may be influenced by the data set. Further, the perception model may be designed to be an object determining model, by means of which the annotation prompt of the object may be determined and annotated in the animated second image or video scene based on the raw camera data of the first image or video scene captured from the reality of the driving.

The perception system or the perception module of the object detecting system may be crucial for the static and dynamic accuracy and the sensitivity of the object detecting system of the vehicle, as the perception may be defined as the ability to process and understand information gained from the external environment from the data provided by multiple sensors of the vehicle. A reliable and robust object detecting system may be provided, when the user may continuously assist to optimize the perception model of the perception module, which may be arranged in the AD or ADAS software stack of the vehicle, by determining and recording a plurality of adjusting events or rare events in a training module or during the real-world driving. Such rare events may possibly occur from daily drives by the drivers or the AD/ADAS driving modes. Therefore, different autonomous driving components may form different approaches to collect data of the rare event, for example, mismatches from the fleet that may comprise multiple vehicles. The data generated in the collected rare events may thus be used to train the machine learning model of the perception module and/or reproduce the scenarios in a simulation environment for performing the verification and validation.

The data set may be generated or recorded for a predefined time interval ranging from a few seconds prior to a time point where the touchscreen of the user interface is touched by the user to a few seconds after the time point.

In an example, the user interface may be a gamified user interface. Alternatively or additionally, the user interface may comprise a touchscreen display of an infotainment system, which may be configured to allow an interactive communication between the vehicle, in particular a control system of the vehicle, and the user such as the driver or the occupant in the vehicle.

In order to generate multiple data sets at various geographical locations, for example from the rare events or critical scenarios such as sharply breaking the vehicle or omitting a rare road obstacle, the user interface may be designed to be a game interface of a game, for example named as a ghost hunting game. The users including drivers, occupants, passengers, system developers and professional data collectors may be motivated to test, modify and train the perception model of the perception module, while operating the object detecting system and annotating data when monitoring the adjusting events. The adjusting events such as the object missing or falsely detecting events may be designed to be ghost events, and the missing or falsely detected objects may be designed to be the ghost objects. The gamified user interface may be designed to allow the game players gaining gaming points as a reward for determining and recording the ghost events and hunting the ghost objects at the respective locations in the first touchscreen frame and/or in the second touchscreen frame of the gamified user interface. In this way, the users may also be entertained by the game while detecting the critical scenarios for the object detection system.

In an example, the step of determining the adjusting event for triggering and/or modifying the annotation prompt of the object may comprise the step of determining that the annotation prompt of the object is missing or falsely generated in the second image or video scene by the user.

By converting the first image or video scene into the animated second image or video scene using the perception module, the object may be erroneously omitted or erroneously detected based on the pre-existing or current perception model.

The object missing event may lead to an accident or a collision of the vehicle with the object. For example, due to the object missing event, the object detecting system of the vehicle may not be able to detect a pedestrian when riding a bicycle on the road downstream of the driving route of the vehicle. For example, due to the object missing event, the object detecting system of the vehicle may not be able to detect a white truck that is tipped over on the road downstream of the driving route of the vehicle, which may result in a collision accident.

The object falsely detecting event may lead to an accident or a discomfort for the driver and the occupant, as the vehicle may be sharply braked during the driving when the object, which is not present in reality, is falsely detected. For example, due to the object falsely detecting event, the object detecting system may falsely determine the presence of a pedestrian which in the AD or ADAS mode, resulting in a false braking and a rear-end collision.

In an example, the step of recording the adjusting event may comprise the step of recording an object missing event, when the user may determine that the annotation prompt of the object may be missing or not generated in the second image or video scene based on the perception model of the perception module.

For example, the object missing event may be determined as the adjusting event or a false negative event, in case that the object to be detected in the first image or video scene in the first frame of the user interface may not be recognized by the perception model and the annotation prompt of the object may thus lack in the converted and animated second image or video scene in the second frame of the user interface.

In an example, the computer-implemented method may further comprise the step of triggering, based on the recorded object missing event, the annotation prompt of the object by the user in the second frame of the user interface. Alternatively and additionally, the computer-implemented method may further comprise the step of generating and/or outputting the data set, based on the recorded object missing event, for modifying and/or training the perception model of the perception module.

Once the object missing event may be determined by the user when comparing the first and the second image or video scenes, the user may record the object missing event by touching the touchscreen display, in particular by generating the annotation prompt of the object, which may exist in the first image or video scene in the first frame, at a respective position in the second image or video scene in the second frame.

Further, the data set generated during the determining and recording of the object missing event may be collected and transmitted to the perception module for training the perception model and thereby improving the conversion accuracy of the perception module.

In an example, the step of recording the adjusting event may comprise the step of recording an object falsely detecting event, when the user may determine that the annotation prompt of the object may be falsely generated in the second image or video scene based on the perception model of the perception module.

By contrast to determining the object missing event, the object falsely detecting event may be determined as the adjusting event or a false positive event, in case that the object, which may not exist in the first image or video scene in the first frame of the user interface, may be detected and/or annotated with the annotation prompt in the animated second image or video scene in the second frame of the user interface using the perception module.

In an example, the computer-implemented method may further comprise the following steps:
- triggering, based on the recorded object falsely detecting event, the annotation prompt of the object by the user in the first frame of the user interface,
- alternatively or additionally, modifying the annotation prompt of the object in the second frame of the user interface by the user based on the recorded object falsely detecting event,
- alternatively or additionally, generating and/or outputting the data set, based on the recorded object falsely detecting event, for modifying and/or training the perception model of the perception module.

In an example, the first image or video scene may be captured by means of an image sensor of the vehicle.

The image sensor may be a camera, in particular, a stereo camera. For example, the camera may be at least partially directed to the exterior or the road in front of the vehicle and configured to capture the road in front of the vehicle while travelling. As such, the first image or video scene may be a live-viewing image or video scene of the road in front of the vehicle.

In an example, the computer-implemented method may further comprise the step of transmitting the data set, based on the adjusting event for modifying and/or training the perception model of the perception module, and/or a location data set of the adjusting event to an external device by means of a communication unit. The external device may be a mobile terminal, a server and/or a cloud system.

The location data set may be detected and recorded by a position sensor at a location, where the adjusting event, namely the object missing event and/or the object falsely detecting event, may be determined and recorded by the user by triggering the annotation prompt of the object in the first frame and/or in the second frame via the touchscreen display of the user interface.

The data set in combination with the location data set of the vehicle may be communicated from the vehicle to the cloud system for a fleet that may comprise a plurality of vehicles. As such, the data set in combination with the location data set may be used by the cloud system for modifying and/or training a centralized perception model for the fleet. Moreover, the cloud system may be designed to collect a plurality data sets in combination with a plurality of location data sets from the plurality of vehicles to training, optimizing and updating the perception model of the perception module for the fleet, continuously or at a predefined time interval. Alternatively and additionally, the plurality data sets in combination with the plurality of location data sets collected from the plurality of vehicles of the fleet may be received by the vehicle from the external device or the cloud system. Optionally, the updated perception model may be received by the vehicle from the cloud system via the communication unit for converting the first image or video scene to the second image or video scene and annotating the object with the annotation prompt, for example, if the object may be relevant for actuating a braking action of the vehicle or for predicting a possible collision.

Further, there may be provided a computer program element for an object detecting system according to the present disclosure, which, when being executed by a processing element of a vehicle, is adapted to perform the method steps of the first aspect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The computer-implemented method according to the present disclosure may advantageously scale as a result of the data collection of the rare events following the machine learning algorithms. The method according to the present disclosure may further enable the data collection of the rare scenarios in the complex reality, compared to the rule-trigged methods or shadow mode methods, without requiring certain conditions to be fulfilled. Further, the present method may potentially collect high-quality data with accurate annotations as the skills of the users may improve simultaneously for the training neural network model of the perception system.

According to a second aspect, there is provided an object detecting system for a vehicle for carrying out the computer-implemented method according to the present disclosure. The object detecting system comprises a user interface and a perception module. The user interface comprises a first frame, which is configured to visualize a first image or video scene captured by an image sensor, and a second frame, which is arranged in parallel to the first frame.

The perception module comprises a perception model which may be a neural network-based model. The perception module is configured to convert the first image or video scene to a second image or video scene for generating an annotation prompt of the object based on the perception model.

For example, the perception model may be implemented in a matlab based model or a non-matlab based computer program.

The second frame of the user interface is configured to visualize the second image or video scene and/or the annotation prompt of the object, which is an animated image or video scene of the first image or video scene.

The user interface is configured to allow a user determining an adjusting event for triggering and/or modifying the annotation prompt of the object in the first image or video scene and/or in the second image or video scene by identifying a difference between the second image or video scene and the first image or video scene. Further, the user interface is configured to allow the user recording the adjusting event by triggering and/or modifying the annotation prompt of the object in the first frame and/or in the second frame based on the adjusting event.

By converting the first image or video scene into the animated second image or video scene using the perception module, the object may be erroneously omitted or erroneously detected based on the pre-existing or current perception model. The adjusting event may be an object missing event or a negative false event, when the object in the first image or video scene in the first frame may be not present or annotated in the animated second image or video scene in the second frame after converting by the perception module. Alternatively, the adjusting event may be an object falsely detecting event or a negative positive event, when the object detected and annotated in the animated second image or video scene in the second frame may not exist in the first image or video scene in the first frame.

In an example, the object detecting system may further comprise an evaluation unit, which may be configured to generate and/or output a data set, based on the adjusting event recorded and/or the annotation prompt of the object triggered and/or modified by the user for modifying and/or training the perception model of the perception module.

Alternatively or additionally, the evaluation unit may be configured to evaluate an accuracy rate of the data set for assessing the attentiveness of the user based on a function of an accuracy.

In an example, the object detecting system may further comprise a communication unit, which may be configured to transmit the data set, based on the adjusting event and/or the annotation prompt of the object, and/or a location data set of the adjusting event to an external device. The external device may be a mobile terminal, a server and/or a cloud system for a fleet, the fleet comprising a plurality of vehicles.

According to a third aspect, there is provided a vehicle comprising an object detecting system according to the present disclosure for providing a driving safety system during an autonomous driving.

Additionally, there may be provided the use of the object detecting system and/or the vehicle comprising the object detecting system according to the present disclosure for preventing a collision with a pedestrian, and/or for preventing the vehicle from sharply braking the vehicle in the autonomous driving mode and thereby protecting the driver and occupant in the vehicle.

According to a fourth aspect, there is provided a training module for an object detecting system according to the present disclosure for a fleet that comprises a plurality of vehicles. The training module comprises a perception module, a communication unit and an evaluation unit. The perception module comprises a perception model that is a neural network-based model.

The communication unit is configured to receive a plurality of data sets generated by plurality of users from the plurality of vehicles of the fleet by means of an external device, the external device is a mobile terminal, a server and/or a cloud system.

Accordingly, the communication unit may be configured to allow a centralized big data analysis on the plurality of data sets for developing and training the perception model. Further, the communication unit may be configured to transmit the trained perception model to each individual vehicle of the fleet.

The evaluation unit is configured to evaluate a plurality of accuracy rates of the plurality of data sets and/or to assess the attentiveness of the plurality of users based on a function of an accuracy. Additionally, the evaluation unit is configured to modify and/or train the perception model of the perception module by weighing and prioritizing the plurality of data sets generated by the plurality of users from the plurality of the vehicles of the fleet.

When designed to be a gamified program, the training module may be actuated by the driver or the passenger when the driving may be deemed safe and when AD mode is active. Further, for training purpose, rare scenarios of the object missing or falsely detecting events may be introduced into the training module to entertain and attract the users. By assessing the accuracy of the generated data sets and the attentiveness of the users, the gamified training module may be designed to rate the data sets from the different users and prioritize the data sets with a higher accuracy.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows schematically an example of an object detecting system according to the present disclosure.
- Fig. 2: shows schematically an example of a vehicle comprising an object detecting system according to the present disclosure.
- Fig. 3: shows schematically an example of a user interface of an object detecting system according to the present disclosure.
- Fig. 4a: shows schematically an example of a user interface of an object detecting system according to the present disclosure.
- Fig. 4b: shows schematically an example of a user interface of an object detecting system according to the present disclosure.
- Fig. 5: shows schematically a flow chart illustrating a computer-implemented method for training and/or operating an object detecting system for a vehicle according to the present disclosure.

The figures are merely schematic representations and serve only to illustrate examples of the disclosure. Identical or equivalent elements are in principle provided with the same reference signs.

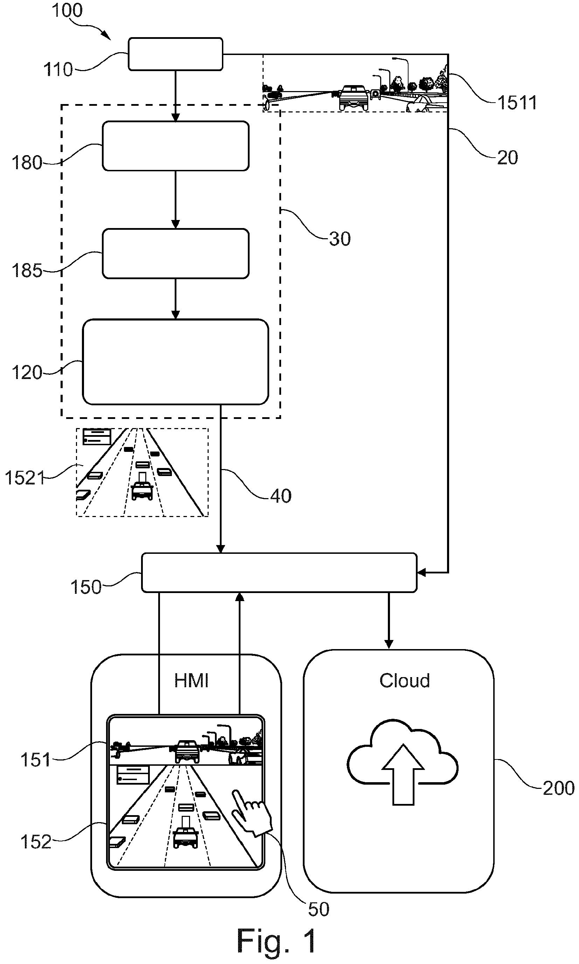

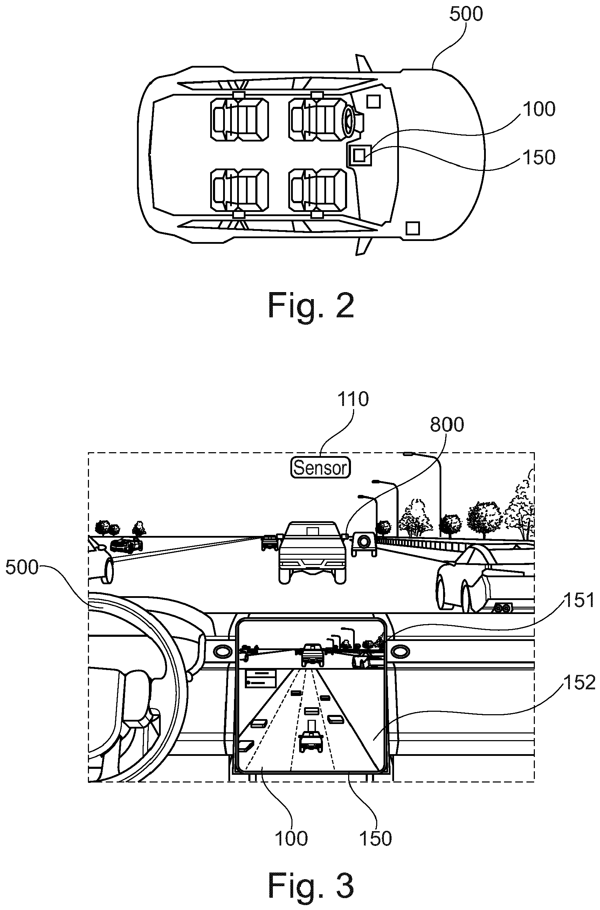

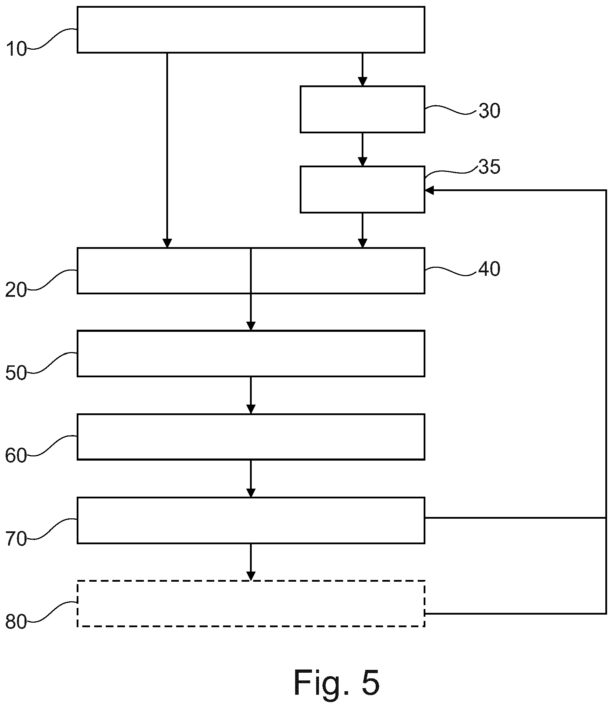

Fig. 1 and Fig. 3 show, respectively, an object detecting system 100 for a vehicle 500, while a vehicle 500 having an object detecting system 100 with a user interface 150 is shown in Fig. 2 for carrying out a computer implemented method as schematically illustrated in Fig. 5. Moreover, Fig. 3 shows a user interface

In Fig. 1 and Fig. 3, the object detecting system 100 may comprise an image sensor 110, which may be designed to capture a first image or video scene 1511. The image sensor 110 may, for example, be a camera that may be provided in the vehicle and at least partially directed to the front of the camera, so that the camera may capture a live-viewing image or video scene of the road in front of the vehicle while travelling along a planned route.

As shown in Fig. 1 and Fig. 3, the object detecting system 100 may further comprise a user interface 150, which may comprise a touchscreen display that may allow an interactive communication between a user, such as a driver or an occupant of the vehicle, and a control and monitoring system of the vehicle. The user interface 150 may comprise a first frame 151, which may be configured to visualize or display the first image or video scene 1511 captured by and received from the image sensor 110, by following a step 20 (also shown in Fig. 5). The user interface 150 may further comprise a second frame 152, which may be arranged in parallel to the first frame 151. For example, the second frame 152 may be arranged under or next to the first frame 151. The second frame 152 of the user interface 150 may be configured to visualize or display a second image or video scene 1521, which may be an animated image or video scene of the first image or video scene 1511, by following a step 40 (also as shown in Fig. 5).

In Fig. 1, in order to generate the animated second image or video scene 1521 corresponding to the first image or video scene 1511, the object detecting system 100 may further comprise a perception module 180, which may comprise a perception model 185 that may be a neural network-based model. Based on the perception model 185, the perception module 180 may be configured to convert the first image or video scene 1511 to the second image or video scene 1521 via a converting unit 120 for generating an annotation prompt 155 of an object 800. The conversion from the first image or video scene 1511 to the second image or video scene 1521 may follow a converting step 30 (also shown in Fig. 5).

Fig. 3 shows that the object 800 may be a pedestrian, an obstacle or a different traveling vehicle 500 on the road in front of the vehicle or downstream of the planning route of the vehicle 500. The object 800 may be detected by the image sensor and annotated in the first and/or second image or video scenes, so that a collision or an accident of the vehicle with the object may be prevented in advance.

The display of the user interface 150 may be configured to allow the user to compare the first and second image or video scenes 1521, 1522, to identify a difference between the first and second image or video scenes 1521, 1522, by following a step 50 (also shown in Fig. 5), and to determine an adjusting event for triggering and/or modifying the annotation prompt 155.

Further, based on the determined adjusting event, the user interface may allow the user recording the adjusting event by triggering and/or modifying the annotation prompt 155 of the object 800 in the first frame 151 and/or in the second frame 152. As shown in Fig. 1, Fig. 3, Fig. 4a and Fig. 4b, the first frame 151 may be arranged as the upper frame displaying the first image or video scene 1511 out of the camera sensor 110. The camera sensor 110 may reveal raw sensor data from the reality during the driving and transform the raw sensor data into the camera projected first image or video scene 1511. The second frame 152 may be arranged as the lower frame displaying the converted and animated second image or video scene 1521 that may reflect the environment outputted from the perception module 180 based on the first image or video scene 1511.

The user interface 150 may be designed to be a gamified user interface and comprise a touchscreen display. For example, the object 800 and/or the annotation prompt 155 of the object 800 corresponding to the adjusting event, may be defined to be a ghost event in the gamified user interface, which may be configured to allow the user gaining predefined gaming points by determining and recording the adjusting event, in particular, by touching the touchscreen display at a respective location in the first frame 151 or in the second frame 152 to trigger the respective annotation prompt 155 of the object 800.

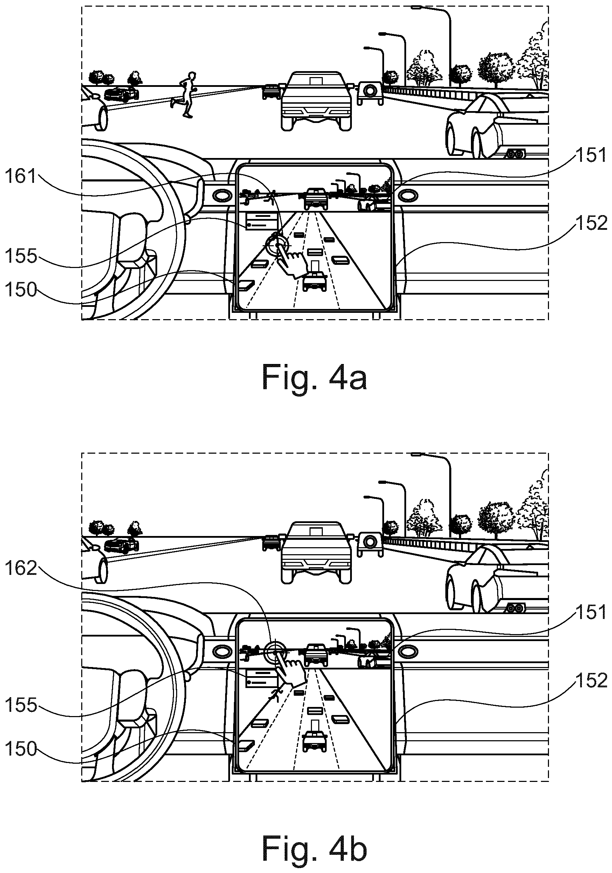

Fig. 4a and Fig. 4b show, respectively, that the adjusting event may be an object missing event 161 or an object falsely detecting event 162.

In Fig. 4a, the object missing event 161 may be determined by the user as a false negative event, when the object 800, such as the pedestrian in the first image or video scene in the first frame 151, and the annotation prompt 155 of the object are missing in the animated second image or video scene in the second frame 152 by the conversion using the perception module 180. As the object 800 captured in the first image or video scene 1511 may correspond to the object or the pedestrian on the road in front of the vehicle while driving in reality, the omitted or missing object in the animated second image or video scene may lead to a collision with the object, when the perception system or the perception module 180 fails to detect the presence of the object 800. In this case, as shown in Fig. 4a, the object in the first image or video scene or in the camera projected video may be detected and shown as a ghost object at a location in the first frame 151. By identifying the missing ghost object 800, the user may touch the second frame 152 of the touchscreen display of the user interface 150 at the respective location to record the object missing event 161. Accordingly, the user may trigger the annotation prompt 155 of the ghost object 800 in the second frame 152 as an infotainment screen frame. For example, when the user interface 150 is designed to be the gamified user interface, the gamified user interface 150 may be configured to allow the user gaining predefined gaming points as a reward for hunting the ghost object at the respective location in the second frame 152.

In Fig. 4b, in contrast to the object missing event 151 of Fig. 4a, the object falsely detecting event 162 may be determined by the user as a false positive event, when the object 800 or the pedestrian, which appears in the second image or video scene 1521 in the second frame 152, is not visualized in the first image or video scene 1511 in the first frame 151 and may not exist in the reality. In this case, the perception system or the perception module 180 of the vehicle 500 may falsely detect the object 800, as the user may see an object in the animated second image or video scene 1521 in the second frame 152 that does not exist in reality. The falsely detected object shown in the second frame 152 or the infotainment frame may lead to an unnecessary sharp braking during driving, resulting a discomfort or a rear-end collision. In this case, as shown in Fig. 4b, the falsely detected object in the second frame 152 may be shown as a ghost object at a location in the second frame 152. By identifying the object falsely detecting event 162, the user may touch the first frame 151 of the touchscreen display of the user interface 150 at the respective location to record the object falsely detecting event 162. Accordingly, the user may trigger the annotation prompt 155 of the object 800 in the first frame 151 at the respective location. Alternatively or additionally, the user may touch the second frame 152 as the infotainment screen frame of the touchscreen display and modify the annotation prompt 155 of the object 800. For example, when the user interface 150 is designed to be the gamified user interface, the gamified user interface 150 may be configured to allow the user gaining predefined gaming points as a reward for hunting the ghost objects at the respective location in the first frame 151.

The object detecting system 100 may further comprise an evaluation unit that may be configured to generate and/or output a data set, based on the adjusting event recorded and/or the annotation prompt 155 of the object 800 triggered and/or modified by the user for modifying and/or training the perception model 185 of the perception module 180. Further, the evaluation unit may be configured to evaluate an accuracy rate of the data set for assessing the attentiveness of the user based on a function of an accuracy.

By determining and recording the object missing event 161 in Fig. 4a and the object falsely detecting event 162 in Fig. 4b by means of the user interface 151, the evaluation unit of the object detecting system 100 may generate the respective data set depending on the object missing or object falsely detecting event 161, 162. The respective data set may be analyzed by the perception module 180 for improving the accuracy and the efficiency of the perception model 185 of the object detecting system 100.

The object detecting system 100 may further comprise a communication unit, which may be configured to transmit the data set, based on the adjusting event 161, 162 and/or the annotation prompt 155 of the object 800, and/or a location data set of the adjusting event to an external device 200, as shown in Fig. 1. The external device 200 may be a mobile terminal, a server and/or a cloud system for a fleet that may comprise a plurality of vehicles 500. The object detecting system 100 may further comprise a position sensor that may be configured to detect or receive the location data set of the adjusting event 161, 162 while the vehicle traveling along the planned route on the road.

Moreover, the perception module 180 may be designed as part of a training module for a fleet that comprises a plurality of the vehicles 500, each of which may be provided with an object detecting system 100. The perception module 180 may comprise the perception model 185 as a neural network-based model, which may be performed in a matlab-based or non-matlab-based computer program.

The communication unit for the fleet may be configured to a plurality of data sets generated by a plurality of users from a plurality of vehicles 500 of the fleet by means of the external device 200 such as the cloud system. Accordingly, the evaluation unit may be configured to evaluate a plurality of accuracy rates of the plurality of data sets and/or to assess the attentiveness of the plurality of users based on a function of an accuracy. Additionally, the evaluation unit may be configured to modify and/or train the perception model 185 of the perception module 180 by weighing and prioritizing the plurality of data sets generated by the plurality of users from the plurality of the vehicles 500 of the fleet. Moreover, the communication unit may further allow a vehicle-to-vehicle communication in the fleet.

As the user interface 150 may be designed to be gamified user interface, the plurality of the users including drivers, occupants, developers, testers or professional data collectors, and game players may use the gamified user interface, for example, on an interactive onboard touchscreen display in the vehicle or on a connected smartphone, tablet or laptop to generate a big data analysis system with the plurality of the data sets and to train the perception module and the perception model which may follow machine learning algorithms. This may advantageously enable determining and recording as many as rare adjusting events from real-world driving and/or from the training module with artificially introduced object missing or object negatively detecting events 161, 162 with the generated plenty of data sets.

Fig. 5 shows a flow chart illustrating a computer-implemented method for training and/or operating an object detecting system 100 for a vehicle 500. The method may start at step 10 where a first image or video scene 1511 may be captured, for example as a camera projected image or video scene, by means of an image sensor 110 of the vehicle 500.

At a subsequent step 20, the first image or video scene 1511 may be visualized in a first frame 151 of a user interface. In parallel, at step 30, the first image or video scene 1511 may be converted to a second image or video scene 1521 for generating an annotation prompt 155 of the object 800 based on a perception model 185 of a perception module 180, and at step 40, the second image or video scene 1521, which may be an animated image or video scene of the first image or video scene 1511, and the annotation prompt 155 of the object 800 may be visualized in a second frame 152 of the user interface 150.

At step 60, an adjusting event may be determined by the user for triggering and/or modifying the annotation prompt 155 of the object 800 in the first image or video scene 1511 and/or in the second image or video scene 1521, after the user may identify, at step 50, a difference between the second image or video scene 1521 and the first image or video scene, which may be arranged in parallel to each other, in particular, one above or next to the other. Once the adjusting event may be determined, the adjusting event may be recorded, at step 70, by triggering and/or modifying the annotation prompt 155 of the object 800 in the first frame 151 and/or the second frame 152 of the user interface 150 based on the adjusting event by the user.

The step 60 of determining the adjusting event for triggering and/or modifying the annotation prompt 155 of the object 800 may comprise the step of determining that the annotation prompt 155 of the object may be missing or falsely generated in the second image or video scene 1521 by the user.

Accordingly, the step 70 of recording the adjusting event may comprise the step of recording an object missing event 161, when the user compares the first and second image or video scenes 1511, 1521 and determines that the annotation prompt 155 of the object 800 is missing or not generated at a location in the second image or video scene 1521 after the conversion of the perception module 180 based on the perception model 185 of the perception module 80. Once the object missing event 161 is determined as a false negative event, the user may record the object missing event 161 by triggering the annotation prompt 155 of the object 800 in the second frame 152. Based on the recorded object missing event 161, the data set may be generated and outputted to the perception module 180 to modify and/or train the perception model 185.

Alternatively, the step 70 of recording the adjusting event may comprise the step of recording an object falsely detecting event 162, when the user compares the first and second image or video scenes 1511, 1521 and determines that the annotation prompt 155 of the object 800 is erroneously annotated or falsely generated in the second image or video scene 1521, since the object 800 does not exist in the first image or video scene 1511 that may be a camera projected image or video scene of the reality. Once the object falsely detecting event 162 is determined as a false positive event, the user my record the object missing event 162 by triggering the annotation prompt 155 of the object 800 in the first frame 151 of the user interface 150. Alternatively or additionally, the user may modify or cancel the falsely annotated annotation prompt 155 of the object 800 in the second frame. Based on the recorded object falsely detecting event 162, the data set may be generated and outputted to the perception module 180 to modify and/or train the perception model 185.

Finally, at step 80, a data set may be generated and/or outputted to the perception module 180 based on the adjusting event recorded and/or the annotation prompt 155 of the object 800 triggered and/or modified by the user, so that the data set may be used further to modify and/or train the perception model 185 of the perception module 180 at step 35. The modified or trained perception model 185 may be applied for the step 30 of converting the first image or video scene 1511 to the second image or video scene 1521.

The computer-implemented method may further comprise the step of transmitting the data set of the adjusting event 161, 162 and a location data set of the adjusting event to an external device 200 by means of a communication unit such as a connected mobile terminal, a server and/or a cloud system, so that the data set and the modified and/or trained perception model 185 may be communicated and shared within a fleet comprising a plurality of vehicles 500.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: objective detecting system
- 110: image sensor
- 120: converting unit
- 150: user interface
- 151: first frame
- 1511: first image or video scene
- 152: second frame
- 1521: second image or video scene
- 155: annotation prompt
- 161: object missing event
- 162: object falsely detecting event
- 180: perception module
- 185: perception model
- 200: external device
- 500: vehicle
- 800: object
- 10: step of capturing first image or video scene
- 20: step of visualizing first image or video scene
- 30: step of converting first image or video scene to second image or video scene
- 35: step of modifying and/or training perception model
- 40: step of visualizing second image or video scene
- 50: step of identifying a difference between first and second image or video scenes
- 60: step of determining adjusting event
- 70: step of recording adjusting event
- 80: step of generating data set

## Claims

1. A computer-implemented method for training and/or operating an object detecting system (100) for a vehicle (500), comprising:
visualizing (20), in a first frame (151) of a user interface (150), a first image or video scene (1511);
converting (30) the first image or video scene (1511) to a second image or video scene (1521) for generating an annotation prompt (155) of the object (800) based on a perception model (185) of a perception module (180);
visualizing (40), in a second frame (152) of the user interface (150), the second image or video scene (1521) and/or the annotation prompt (155) of the object (800), the second image or video scene (1521) being an animated image or video scene of the first image or video scene (1511);
determining (60) an adjusting event for triggering and/or modifying the annotation prompt (155) of the object (800) in the first image or video scene (1511) and/or in the second image or video scene (1521), by a user, by identifying (50) a difference between the second image or video scene (1521) and the first image or video scene (1511); and
recording (70) the adjusting event by triggering and/or modifying the annotation prompt (155) of the object (800), based on the adjusting event, in the first frame (151) and/or the second frame (152) of the user interface (150) by the user.

2. The computer-implemented method according to claim 1, further comprising:
generating and/or outputting (80) a data set, based on the adjusting event recorded and/or the annotation prompt (155) of the object (800) triggered and/or modified by the user, for modifying and/or training (35) the perception model (185) of the perception module (180);
the perception model (185) of the perception module (180) being a neural network-based model.

3. The computer-implemented method according to claim 1 or 2,
the user interface (150) being a gamified user interface; and/or
the user interface (150) comprising a touchscreen display.

4. The computer-implemented method according to one of the preceding claims,
determining the adjusting event for triggering and/or modifying the annotation prompt (155) of the object (800) comprising the step of determining that the annotation prompt (155) of the object (800) is missing or falsely generated in the second image or video scene (1521) by the user.

5. The computer-implemented method according to one of the preceding claims,
recording the adjusting event comprising the step of recording an object missing event (161), when the user determines that the annotation prompt (155) of the object (800) is missing in the second image or video scene (1521) based on the perception model (185) of the perception module (180).

6. The computer-implemented method according to claim 5, further comprising:
triggering, based on the recorded object missing event (161), the annotation prompt (155) of the object by the user in the second frame (152) of the user interface (150); and/or
generating and/or outputting the data set, based on the recorded object missing event (161), for modifying and/or training the perception model (185) of the perception module (180).

7. The computer-implemented method according to one of the claims 1 to 4,
recording the adjusting event comprising the step of recording an object falsely detecting event (162), when the user determines that the annotation prompt (155) of the object (800) is falsely generated in the second image or video scene (1521) based on the perception model (185) of the perception module (180).

8. The computer-implemented method according to claim 7, further comprising:
triggering, based on the recorded object falsely detecting event (162), the annotation prompt (155) of the object (800) by the user in the first frame (151) of the user interface (150); and/or
modifying, based on the recorded object falsely detecting event (162), the annotation prompt (155) of the object (800) in the second frame (152) of the user interface (150) by the user; and/or
generating and/or outputting the data set, based on the recorded object falsely detecting event (162), for modifying and/or training the perception model (185) of the perception module (180).

9. The computer-implemented method according to one of the preceding claims,
the first image or video scene (1511) being captured by means of an image sensor (110) of the vehicle (500).

10. The computer-implemented method according to one of the preceding claims, further comprising:
transmitting the data set, based on the adjusting event for modifying and/or training the perception model (185) of the perception module (180), and/or a location data set of the adjusting event to an external device (200) by means of a communication unit;
the external device (200) being a mobile terminal, a server and/or a cloud system.

11. An object detecting system (100) for a vehicle (500) for carrying out the computer-implemented method according to one of the claims 1 to 10, comprising:
a user interface (150) comprising
a first frame (151), the first frame (151) being configured to visualize a first image or video scene (1511) captured by an image sensor (110), and
a second frame (152), arranged in parallel to the first frame (151); and
a perception module (180), the perception module (180) comprising a perception model (185), the perception model (185) being a neural network-based model;
the perception module (180) being configured to convert the first image or video scene (1511) to a second image or video scene (1521) for generating an annotation prompt (155) of the object (800) based on the perception model (185);
the second frame (152) being configured to visualize the second image or video scene (1521) and/or the annotation prompt (155) of the object (800), the second image or video scene (1521) being an animated image or video scene of the first image or video scene (1511);
the user interface (150) being configured to allow a user determining an adjusting event for triggering and/or modifying the annotation prompt (155) of the object (800) in the first image or video scene (1511) and/or in the second image or video scene (1521) by identifying a difference between the second image or video scene (1521) and the first image or video scene (1511); and
the user interface (150) being configured to allow the user recording the adjusting event by triggering and/or modifying the annotation prompt (155) of the object (800) in the first frame (151) and/or in the second frame (152) based on the adjusting event.

12. The object detecting system (100) according to claim 11, further comprising:
an evaluation unit,
the evaluation unit being configured to generate and/or output a data set, based on the adjusting event recorded and/or the annotation prompt (155) of the object (800) triggered and/or modified by the user for modifying and/or training the perception model (185) of the perception module (180); and/or
the evaluation unit being configured to evaluate an accuracy rate of the data set for assessing the attentiveness of the user based on a function of an accuracy.

13. The object detecting system (100) according to claim 11 or 12, further comprising:
a communication unit;
the communication unit being configured to transmit the data set, based on the adjusting event and/or the annotation prompt (155) of the object (800), and/or a location data set of the adjusting event to an external device (200);
the external device (200) being a mobile terminal, a server and/or a cloud system for a fleet, the fleet comprising a plurality of vehicles (500).

14. A vehicle (500) comprising an object detecting system (100) according to one of the claims 11 to 13 for providing a driving safety system during autonomous driving.

15. A training module for an object detecting system (100) according to one of the claims 11 to 13 for a fleet, the fleet comprising a plurality of vehicles (500), comprising:
a perception module (180), the perception module (180) comprising a perception model (185), the perception model (185) being a neural network-based model;
a communication unit, and
an evaluation unit;
the communication unit being configured to receive a plurality of data sets generated by a plurality of users from the plurality of vehicles (500) of the fleet by means of an external device (200), the external device (200) being a mobile terminal, a server and/or a cloud system;
the evaluation unit being configured to evaluate a plurality of accuracy rates of the plurality of data sets and/or to assess the attentiveness of the plurality of users based on a function of an accuracy; and
the evaluation unit being configured to modify and/or train the perception model (185) of the perception module (180) by weighing and prioritizing the plurality of data sets generated by the plurality of users from the plurality of the vehicles (500) of the fleet.

## Amended claims

### Amended claims in accordance with Rule 137(2) EPC.

1. A computer-implemented method for training and/or operating an object detecting system (100) for a vehicle (500), comprising:
visualizing (20), in a first frame (151) of a user interface (150), a first image or video scene (1511), the first image or video scene being generated from raw data of a camera image or video captured by an image sensor (110) from the reality of the driving;
converting (30) the first image or video scene (1511) to a second image or video scene (1521) for generating an annotation prompt (155) of the object (800) based on a perception model (185) of a perception module (180), the perception model (185) being designed to be an object determining model;
visualizing (40), in a second frame (152) of the user interface (150) being arranged in parallel to the first frame (151), the second image or video scene (1521) and, when the annotation prompt of the object (800) is determined by means of the perception model (185), the annotation prompt (155) of the object (800), the second image or video scene (1521) being an animated image or video scene of the first image or video scene (1511);
determining (60) an adjusting event for triggering or modifying the annotation prompt (155) of the object (800) in the first image or video scene (1511) or in the second image or video scene (1521), by a user, by identifying (50) a difference between the second image orvideo scene (1521) and the first image orvideo scene (1511); and
recording (70) the adjusting event by triggering or modifying the annotation prompt (155) of the object (800), based on the adjusting event, in the first frame (151) or the second frame (152) of the user interface (150) by the user.

2. The computer-implemented method according to claim 1, further comprising:
generating and/or outputting (80) a data set, based on the adjusting event recorded and/or the annotation prompt (155) of the object (800) triggered and/or modified by the user, for modifying and/or training (35) the perception model (185) of the perception module (180);
the perception model (185) of the perception module (180) being a neural network-based model.

3. The computer-implemented method according to claim 1 or 2,
the user interface (150) being a gamified user interface; and/or
the user interface (150) comprising a touchscreen display.

4. The computer-implemented method according to one of the preceding claims,
determining the adjusting event for triggering and/or modifying the annotation prompt (155) of the object (800) comprising the step of determining that the annotation prompt (155) of the object (800) is missing or falsely generated in the second image or video scene (1521) by the user.

5. The computer-implemented method according to one of the preceding claims,
recording the adjusting event comprising the step of recording an object missing event (161), when the user determines that the annotation prompt (155) of the object (800) is missing in the second image or video scene (1521) based on the perception model (185) of the perception module (180).

6. The computer-implemented method according to claim 5, further comprising:
triggering, based on the recorded object missing event (161), the annotation prompt (155) of the object by the user in the second frame (152) of the user interface (150); and/or
generating and/or outputting the data set, based on the recorded object missing event (161), for modifying and/or training the perception model (185) of the perception module (180).

7. The computer-implemented method according to one of the claims 1 to 4,
recording the adjusting event comprising the step of recording an object falsely detecting event (162), when the user determines that the annotation prompt (155) of the object (800) is falsely generated in the second image or video scene (1521) based on the perception model (185) of the perception module (180).

8. The computer-implemented method according to claim 7, further comprising:
triggering, based on the recorded object falsely detecting event (162), the annotation prompt (155) of the object (800) by the user in the first frame (151) of the user interface (150); and/or
modifying, based on the recorded object falsely detecting event (162), the annotation prompt (155) of the object (800) in the second frame (152) of the user interface (150) bv the user and/or
generating and/or outputting the data set, based on the recorded object falsely detecting event (162), for modifying and/or training the perception model (185) of the perception module (180).

9. The computer-implemented method according to one of the preceding claims,
the first image or video scene (1511) being captured by means of an image sensor (110) of the vehicle (500).

10. The computer-implemented method according to one of the preceding claims, further comprising:
transmitting the data set, based on the adjusting event for modifying and/or training the perception model (185) of the perception module (180), and/or a location data set of the adjusting event to an external device (200) by means of a communication unit;
the external device (200) being a mobile terminal, a server and/or a cloud system.

11. An object detecting system (100) for a vehicle (500) for carrying out the computer-implemented method according to one of the claims 1 to 10, comprising:
a user interface (150) comprising
a first frame (151), the first frame (151) being configured to visualize a first image or video scene (1511) being generated from raw data of a camera image or video captured by an image sensor (110) from the reality of the driving, and
a second frame (152), arranged in parallel to the first frame (151); and
a perception module (180), the perception module (180) comprising a perception model (185), the perception model (185) being a neural network-based model and designed to be an object determining model;
the perception module (180) being configured to convert the first image or video scene (1511) to a second image or video scene (1521) for generating an annotation prompt (155) of the object (800) based on the perception model (185);
the second frame (152) being configured to visualize the second image or video scene (1521) and, when the annotation prompt of the object (800) is determined by means of the perception model (185), the annotation prompt (155) of the object (800), the second image or video scene (1521) being an animated image or video scene of the first image orvideo scene (1511);
the user interface (150) being configured to allow a user determining an adjusting event for triggering or modifying the annotation prompt (155) of the object (800) in the first image or video scene (1511) or in the second image or video scene (1521) by identifying a difference between the second image or video scene (1521) and the first image or video scene (1511); and
the user interface (150) being configured to allow the user recording the adjusting event by triggering or modifying the annotation prompt (155) of the object (800) in the first frame (151) or in the second frame (152) based on the adjusting event.

12. The object detecting system (100) according to claim 11, further comprising:
an evaluation unit,
the evaluation unit being configured to generate and/or output a data set, based on the adjusting event recorded and/or the annotation prompt (155) of the object (800) triggered and/or modified by the user for modifying and/or training the perception model (185) of the perception module (180); and/or
the evaluation unit being configured to evaluate an accuracy rate of the data set for assessing the attentiveness of the user based on a function of an accuracy.

13. The object detecting system (100) according to claim 11 or 12, further comprising:
a communication unit;
the communication unit being configured to transmit the data set, based on the adjusting event and/or the annotation prompt (155) of the object (800), and/or a location data set of the adjusting event to an external device (200);
the external device (200) being a mobile terminal, a server and/or a cloud system for a fleet, the fleet comprising a plurality of vehicles (500).

14. A vehicle (500) comprising an object detecting system (100) according to one of the claims 11 to 13 for providing a driving safety system during autonomous driving.
